# EUROPEAN PATENT SPECIFICATION

(11) **EP 4 670 938 B1**
(45) Date of publication and mention of the grant of the patent: **07.10.2026**
(21) Application number: 25173128.7
(22) Date of filing: 29.04.2025
(51) Int. Cl.: B27K 3/52, A01N 25/08, C01B 33/00

(54) **ANTI-MOLD AND ODOR-REMOVING OSB CONTAINING BIOLOGICALLY ACTIVE SUBSTANCE AND PREPARATION METHOD THEREOF**
BIOLOGISCH AKTIVE SUBSTANZ ENTHALTENDES ANTI-MOLD- UND GERUCHSENTFERNENDES OSB UND HERSTELLUNGSVERFAHREN DAFÜR
OSB ANTI-MOISISSURE ET ELIMINANT LES ODEURS CONTENANT UNE SUBSTANCE BIOLOGIQUEMENT ACTIVE ET SON PROCÉDÉ DE PRÉPARATION

(30) Priority: 25.06.2024 CN 202410825042
(43) Date of publication of application: 31.12.2025
(73) Proprietor: BYHERB FUTURE HEALTH TECHNOLOGY (QINGDAO) CO., LTD., Qingdao, Shandong 266071 (CN); BYHERB BIGBIO TECHNOLOGY (QINGDAO) CO., LTD., Qingdao, Shandong 266071 (CN); Byherb Fiber Inc., 20120 Centreville, VA (US)
(72) Inventor: Wang, Peiyu, Qingdao, Shandong, 266071 (CN); Huang, Xiaohua, Qingdao, Shandong, 266071 (CN); Huang, Yuanlong, Qingdao, Shandong, 266071 (CN); He, Meng, Qingdao, Shandong, 266071 (CN); Shao, Mingliang, Qingdao, Shandong, 266071 (CN); Su, Xiaoying, Qingdao, Shandong, 266071 (CN)
(74) Representative: Lohr, Jöstingmeier & Partner Patent- und Rechtsanwälte mbB

(56) References cited:
- CN-A- 106 493 817
- US-A1- 2006 269 677

## Description

### TECHNICAL FIELD

The present disclosure relates to the technical field of oriented strand board (OSB), and more specifically, relates to anti-mold and odor-removing OSB containing biologically active substances.

### BACKGROUND

The OSB, also known as oriented strand board or European pine board, is primarily used for wall paneling. It is a synthetic wood material originating from Europe and rapidly developed internationally during the 1970s and 1980s. The application of European pine board in furniture has seen unprecedented development, with many large furniture enterprises starting to use OSBs for furniture manufacturing. OSBs are characterized by the advantages of no formaldehyde release, light weight, wear resistance, and good flatness.

Compared with a finished plate which is processed through plastic deformation, with the surface processed (e.g., by grinding and cutting) with higher precision and surface finish, a plate often refers to the original material that has not been processed. After formation, it needs to go through a series of processing to become a finished product.

However, furniture made from OSBs may have poor mold resistance, suboptimal anti-bacterial performance, and a tendency to generate odors. The existing technology typically involves the addition of biologically active substances to enhance mold resistance and odor removal performance.

Masson pine needles have a fresh and mellow fragrance, a long-lasting aftertaste, a persistent tender aroma, and a unique pine scent. Camphor wood contains rich volatile oils, which provide a strong and distinctive aroma. When used in furniture, camphor wood emits a pleasant fragrance. Moreover, both Masson pine needles and camphor wood possess excellent insect-repellent and anti-mold properties, superior anti-bacterial properties, and long-lasting fragrance retention, and have good odor removal performance.

In order to enhance the anti-mold, anti-bacterial, and odor-removing performance of OSBs, it is currently common to include biologically active substances such as Masson pine needles, camphor wood extracts, and similar materials. However, biologically active ingredients such as Masson pine needles and camphor wood extracts are prone to loss, which adversely affects the anti-bacterial and odor-removing performance, where their effects are not long-lasting.

Existing technology also involves the preparation of molecular nests with plant extracts, where the plant extracts are encapsulated to achieve sustained-release properties. This may enhance the anti-bacterial, odor-removing, and anti-mold performance, thereby extending the duration of their effects. However, the OSBs produced by this method exhibit poor aging resistance, where their anti-bacterial performance significantly decreases after aging tests.

Furthermore, the existing OSBs containing biologically active substances have low mechanical performance, where the retention of mechanical performance after aging tests is poor. US 2006/269677 A1 relates to a method of protecting wood through enhanced penetration of wood preservatives and a related solution. CN 106 493 817 A relates to a kind of wooden furniture mildew resistance insect-prevention treatment agent.

### SUMMARY

The invention is defined in the claims. One aspect of the present disclosure provides a method for preparing an anti-mold and odor-removing oriented strand board (OSB), which includes a biologically active substance. The method includes preparing the biologically active substance, preparing a molecular nest carrier, loading the molecular nest carrier with the biologically active substance, preparing a functional impregnating agent, and impregnating a OSB with the functional impregnating agent. Preparing the molecular nest carrier includes first-time modifying zeolite powder, second-time modifying zeolite powder, modifying β-cyclodextrin, mixing, and cross-linking. The first-time modifying zeolite powder includes: soaking zeolite powder in 5 times the volume of a sodium hydroxide solution at a temperature of 63-67 °C for 52-58 minutes; filtering, washing, and drying to obtain soaked zeolite powder; placing the soaked zeolite powder in a calcination furnace for high-temperature treatment, heating at a rate of 2.3-2.8 °C/min to 176-185 °C, maintaining at 176-185 °C for 37-42 minutes, then heating at a rate of 3.0-3.5 °C/min to 362-376 °C, maintaining at 362-376 °C for 2.4-2.6 hours; and naturally cooling to room temperature to obtain first-time modified zeolite powder. The second-time modifying zeolite powder includes: mixing the first-time modified zeolite powder with a modifying solution; heating to 60-64 °C, stirring for 31-37 minutes at a stirring speed of 357-370 rpm; cooling at a rate of 0.4-0.6 °C/min to 42-48 °C, adding kH560 and hexadecyltrimethoxysilane; continuing to stir for 2.4-2.6 hours at a stirring speed of 278-300 rpm; and filtering, washing, and drying to obtain second-time modified zeolite powder. Wherethe modifying solution includes 33-36wt% ethanol solution, coconut acid diethanolamide, and sodium lauryl sulfate. Modifying β-cyclodextrin includes: placing β-cyclodextrin in anhydrous ethanol; adding polyvinyl pyrrolidone and polyethylene glycol 200 for ball milling at a temperature of 53-58 °C for 17-22 minutes at a ball milling speed of 344-357 rpm; adding γ-aminopropylmethyldiethoxysilane; continuing ball milling for 27-32 minutes at a ball milling speed of 123-133 rpm; heating to 64-68 °C, stirring for 2.8-3.2 hours; and naturally cooling to room temperature, washing, and drying to obtain modified β-cyclodextrin. The mixing includes: placing the modified β-cyclodextrin in dimethylformamide; adding the second-time modified zeolite powder and sodium dodecylbenzene sulfonate; heating to 85-88 °C; performing ultrasonic treatment for 13-17 minutes at an ultrasonic power of 44-51 W and a frequency of 33-38 kHz; and stirring at a speed of 198-211 rpm for 2.6-2.8 hours, washing, and drying to obtain a primary molecular nest. The cross-linking includes: adding acetic acid solution to chitosan; stirring evenly; adding the primary molecular nest, stirring for 13-17 minutes; heating to 66-68 °C; adding glutaraldehyde solution; performing ultrasonic treatment for 18-22 minutes at an ultrasonic frequency of 35-37 kHz and a power of 45-50 W; stirring at 66-68 °C for 1.9-2.2 hours at a stirring speed of 200-208 rpm; naturally cooling to room temperature; washing with acetone for 3 times; and vacuum freeze-drying at a freezing temperature of -47 °C to -42 °C and a vacuum degree of 30-35 Pa for 18-23 hours, to obtain the molecular nest carrier.

Another aspect of the present disclosure provides an anti-mold and odor-removing OSB. The anti-mold and odor-removing OSB includes a biologically active substance, and the biologically active substance includes Masson pine needles, camphorwood, or a mixture of Masson pine needles and camphorwood.

### DETAILED DESCRIPTION

To provide a clearer understanding of the technical features, objectives, and effects of this disclosure, the specific embodiments of the present disclosure are now described.

Various embodiments provide an anti-mold and odor-removing oriented strand board (OSB) plate. An exemplary OSB plate includes a biologically active substance. The biologically active substance is loaded using a molecular nest carrier. A functional impregnating agent is prepared for impregnating the OSB plate. The molecular nest carrier is prepared by, for example, a first modification of zeolite powder, a second modification of zeolite powder, a modification of β-cyclodextrin, a mixing step, and a cross-linking step.

The first modification of zeolite powder may include operations of, for example, soaking zeolite powder in a sodium hydroxide solution, followed by filtering, washing, and drying to obtain soaked zeolite powder; placing the soaked zeolite powder in a calcination furnace for high-temperature treatment; and naturally cooling to room temperature to obtain first-time modified zeolite powder.

In one embodiment, the first modification of zeolite powder may include soaking zeolite powder in 5 times the volume of a sodium hydroxide solution at a temperature of 63-67 °C for 52-58 minutes; filtering, washing, and drying to obtain soaked zeolite powder; placing the soaked zeolite powder in a calcination furnace for high-temperature treatment, heating at a rate of 2.3-2.8 °C/min to 176-185 °C, maintaining at 176-185 °C for 37-42 minutes, and then heating at a rate of 3.0-3.5 °C/min to 362-376 °C, maintaining at 362-376 °C for 2.4-2.6 hours.

The second modification of zeolite powder may include operations of, for example, mixing the first-time modified zeolite powder with a modifying solution that includes ethanol, coconut acid diethanolamide, and sodium lauryl sulfate; followed by heating, cooling, mixing with kH560 and hexadecyltrimethoxysilane, filtering, washing, and drying to obtain second-time modified zeolite powder.

For example, in one embodiment, the second modification of zeolite powder may include mixing the first modified zeolite powder with a modifying solution, the modifying solution including 33-36wt% ethanol solution, coconut acid diethanolamide, and sodium lauryl sulfate; heating to 60-64 °C, stirring for 31-37 minutes at a stirring speed of 357-370 rpm; cooling at a rate of 0.4-0.6 °C/min to 42-48 °C, adding kH560 and hexadecyltrimethoxysilane; continuing to stir for 2.4-2.6 hours at a stirring speed of 278-300 rpm; and filtering, washing, and drying to obtain second-time modified zeolite powder.

The modification of β-cyclodextrin may be performed by placing β-cyclodextrin in anhydrous ethanol; adding polyvinyl pyrrolidone and polyethylene glycol for ball milling; adding γ-aminopropylmethyldiethoxysilane, followed by continuing ball milling, heating, and naturally cooling to room temperature to obtain modified β-cyclodextrin.

In one embodiment, the modification of β-cyclodextrin may include placing β-cyclodextrin in anhydrous ethanol; adding polyvinyl pyrrolidone and polyethylene glycol 200 for ball milling at a temperature of 53-58 °C for 17-22 minutes at a ball milling speed of 344-357 rpm; adding γ-aminopropylmethyldiethoxysilane; continuing ball milling for 27-32 minutes at a ball milling speed of 123-133 rpm; heating to 64-68 °C, stirring for 2.8-3.2 hours; and naturally cooling to room temperature, washing, and drying to obtain modified β-cyclodextrin.

The modified β-cyclodextrin and the second-time modified zeolite powder may be mixed by placing the modified β-cyclodextrin in dimethylformamide, then adding the second-time modified zeolite powder and sodium dodecylbenzene sulfonate; followed by heating, ultrasonic treatment, washing, and drying to obtain a primary molecular nest.

In one embodiment, the mixing may include placing the modified β-cyclodextrin in dimethylformamide; adding the second-time modified zeolite powder and sodium dodecylbenzene sulfonate; heating to 85-88 °C; performing ultrasonic treatment for 13-17 minutes at an ultrasonic power of 44-51 W and a frequency of 33-38 kHz; and stirring at a speed of 198-211 rpm for 2.6-2.8 hours, washing, and drying to obtain a primary molecular nest.

The primary molecular nest may undergo a cross-linking process with chitosan. For example, chitosan may be added into acetic acid solution, and then mixed with the primary molecular nest. In some embodiments, glutaraldehyde solution may then be added, together under an ultrasonic treatment.

For example, the cross-linking process may include adding acetic acid solution to chitosan; stirring evenly; adding the primary molecular nest, stirring for 13-17 minutes; heating to 66-68 °C; adding glutaraldehyde solution; performing ultrasonic treatment for 18-22 minutes at an ultrasonic frequency of 35-37 kHz and a power of 45-50 W; stirring at 66-68 °C for 1.9-2.2 hours at a stirring speed of 200-208 rpm; naturally cooling to room temperature; washing with acetone for 3 times; and vacuum freeze-drying at a freezing temperature of -47 °C to -42 °C and a vacuum degree of 30-35 Pa for 18-23 hours, to obtain the molecular nest carrier.

### Embodiment 1

### 1. Preparing a biologically active substance

The plants are thoroughly cleaned and dried to a moisture content of 1.5wt%. The dried plants are then placed in an airflow pulverizer for grinding, producing a powder with a particle size of 200 nm. The powder is then placed in 6 times the volume of an ethanol solution, with the stirring rate controlled at 200 rpm. While stirring, the temperature is increased at a rate of 3.8 °C/min until it reaches 58 °C. The stirring continues for 2.5 hours. After stirring, microwave-ultrasonic extraction is performed, with the microwave power controlled at 480 W, microwave frequency at 2000 MHz, ultrasonic frequency at 32 kHz, ultrasonic power at 360 W, and microwave-ultrasonic extraction time at 3.2 minutes. After the microwave-ultrasonic extraction, the temperature is raised to 65 °C and maintained for 1.5 hours. After this treatment, the extract is filtered and concentrated under vacuum conditions (vacuum degree of 0.04 MPa) at 74 °C to 30% of its original volume. Finally, the extract is spray-dried and pulverized to a particle size of 250 nm, yielding the biologically active substance.

The plants used are a mixture of Masson pine needles and camphor wood in a mass ratio of 1:1. The ethanol solution has a volume concentration of 70%.

### 2. Preparing a molecular nest carrier

### (1) First-time modifying zeolite powder

The zeolite powder is soaked in 6 times the volume of a sodium hydroxide solution. The soaking temperature is 65 °C, and the soaking time is 55 minutes. After soaking, the zeolite powder is filtered, washed, and dried, yielding the soaked zeolite powder. This soaked zeolite powder is then placed in a calcining furnace for high-temperature treatment. The temperature is first increased at a rate of 2.5 °C/min to 180 °C, maintained at 180 °C for 40 minutes, and then increased at a rate of 3.2 °C/min to 370 °C, maintained at 370 °C for 2.5 hours. After the heat treatment, the temperature is naturally lowered to room temperature, yielding first-time modified zeolite powder.

The zeolite powder has a particle size of 400 nm.

The sodium hydroxide solution has a mass concentration of 30%.

### (2) Second-time modifying zeolite powder

17 g of the first-time modified zeolite powder is mixed with 93 g of modifying solution, heated to 62 °C, and stirred for 34 minutes at a stirring speed of 365 rpm. After uniform stirring, the temperature is reduced to 45 °C at a rate of 0.5 °C/min, and 1.2g of KH560 and 0.6 g of hexadecyltrimethoxysilane are added. Stirring continues for 2.5 hours at a speed of 290 rpm. After stirring, the mixture is filtered, washed, and dried, yielding second-time modified zeolite powder.

The modifying solution includes a 35wt% ethanol solution, coconut acid diethanolamide, and sodium lauryl sulfate in a mass ratio of 97:1.2:0.8.

### (3) Modifying β-cyclodextrin

35 g of β-cyclodextrin is placed in 200 g of anhydrous ethanol, and 1.7 g of polyvinyl pyrrolidone and 2.0 g of polyethylene glycol 200 are added for ball milling. The ball milling temperature is 56 °C, the ball milling time is 20 minutes, and the ball milling speed is 352 rpm. After ball milling, 2.6 g of γ-aminopropylmethyldiethoxysilane is added, and ball milling continues for 30 minutes at a speed of 128 rpm. After ball milling, the temperature is raised to 66 °C, and the reaction is stirred for 3.0 hours. After stirring, the mixture is naturally cooled to room temperature, washed, and dried to obtain modified β-cyclodextrin.

### (4) Mixing

20g of the modified β-cyclodextrin is placed in 130g of dimethylformamide, then 3.7g of the second-time modified zeolite powder and 2.4g of sodium dodecylbenzene sulfonate are added. The temperature is raised to 87 °C for ultrasonic treatment. The ultrasonic time is 15 minutes, ultrasonic power is 48 W, and ultrasonic frequency is 36 kHz. After ultrasonic treatment, the mixture is stirred at a speed of 204 rpm for 2.7 hours. After stirring, the mixture is washed, dried, and the primary molecular nest is obtained.

### (5) Cross-linking

14mL of acetic acid solution is added to 0.5g of chitosan, and after uniform stirring, 0.8g of the primary molecular nest is added. The mixture is stirred for 15 minutes and then heated to 67 °C. 3.4mL of glutaraldehyde solution is added for ultrasonic treatment. The ultrasonic time is 20 minutes, ultrasonic frequency is 36 kHz, and ultrasonic power is 47 W. After ultrasonic treatment, the mixture is stirred at 67 °C for 2.0 hours at a speed of 205 rpm. After stirring, the mixture is naturally cooled to room temperature, washed with acetone for 3 times, and vacuum freeze-dried at -45 °C for 20 hours under a vacuum degree of 32 Pa, resulting in the molecular nest carrier.

The chitosan has a deacetylation degree of 91.2% and a molecular weight of 150,000.

The acetic acid solution has a mass concentration of 5.0%.

The glutaraldehyde solution has a mass concentration of 50%.

### 3. Loading

The molecular nest carrier is mixed with 8 times the volume of deionized water, and propylene glycol fatty acid ester is added. The temperature is raised to 48 °C and stirred for 27 minutes, then the biologically active substance is added, and the mixture is stirred for 2.2 hours at a stirring speed of 175 rpm. After stirring, the mixture is allowed to stand for 6.5 hours. After standing, the mixture is filtered and dried to obtain the functional molecular nest.

The deionized water, the propylene glycol fatty acid ester, and the biologically active substance are in a mass ratio of 96:1.3:8.7.

### 4. Preparing a functional impregnating agent

Liquid paraffin and carboxymethyl cellulose are added to deionized water and stirred evenly. The temperature is then raised to 46 °C, and the functional molecular nest and silica sol are added. Stirring continues for 35 minutes at a stirring speed of 458 rpm. After stirring, the functional impregnating agent is obtained.

The deionized water, the liquid paraffin, the carboxymethyl cellulose, the functional molecular nest, and the silica sol are in a mass ratio of 110:2.5:8.3:11:9.0.

### 5. Impregnating

200g of a OSB is placed in a sealed container, followed by the introduction of 7 times the volume of a functional impregnating agent and 8.3g of isooctyl alcohol polyoxyethylene ether. Nitrogen gas is introduced to raise the pressure to 0.8 MPa, with the impregnating temperature controlled at 55 °C. The impregnating time is 4.5 hours. After impregnating, the OSB is ventilated and dried at 30 °C for 12 hours, resulting in an anti-mold, odor-removing OSB containing the biologically active substance.

### Embodiment 2

### 1. Preparing a biologically active substance

The plants are thoroughly cleaned and dried to a moisture content of 1.3wt%. The dried plants are then placed in an airflow pulverizer for grinding, producing a powder with a particle size of 180 nm. The powder is then placed in 5 times volume of an ethanol solution, with the stirring rate controlled at 190 rpm. While stirring, the temperature is increased at a rate of 3.5 °C/min until it reaches 56 °C. The stirring continues for 2.4 hours. After stirring, microwave-ultrasonic extraction is performed, with the microwave power controlled at 474 W, microwave frequency at 1950 MHz, ultrasonic frequency at 30 kHz, ultrasonic power at 354 W, and microwave-ultrasonic extraction time at 3.0 minutes. After the microwave-ultrasonic extraction, the temperature is raised to 64 °C and maintained for 1.3 hours. After this treatment, the extract is filtered and concentrated under vacuum conditions (vacuum degree of 0.03 MPa) at 72 °C to 28% of its original volume. Finally, the extract is spray-dried and pulverized to a particle size of 245 nm, yielding the biologically active substance.

The plants used are Masson pine needles.

The ethanol solution has a volume concentration of 68%.

### 2. Preparing a molecular nest carrier

### (1) First-time modifying zeolite powder

The zeolite powder is soaked in 5 times the volume of sodium hydroxide solution. The soaking temperature is 63 °C, and the soaking time is 52 minutes. After soaking, the zeolite powder is filtered, washed, and dried, yielding the soaked zeolite powder. This soaked zeolite powder is then placed in a calcining furnace for high-temperature treatment. The temperature is first increased at a rate of 2.3 °C/min to 176 °C, maintained at 176 °C for 37 minutes, and then increased at a rate of 3.0 °C/min to 362 °C, where it is maintained for 2.4 hours. After the heat treatment, the temperature is naturally lowered to room temperature, yielding first-time modified zeolite powder.

The particle size of the zeolite powder is 380 nm.

The sodium hydroxide solution has a mass concentration of 28%.

### (2) Second-time modifying zeolite powder

16g of the first-time modified zeolite powder is mixed with 90g of modifying solution, heated to 60 °C, and stirred for 31 minutes at a stirring speed of 357 rpm. After uniform stirring, the temperature is reduced to 42 °C at a rate of 0.4 °C/min, and 1.0g of KH560 and 0.5g of hexadecyltrimethoxysilane are added. Stirring continues for 2.4 hours at a stirring speed of 278 rpm. After stirring, the mixture is filtered, washed, and dried, yielding second-time modified zeolite powder.

The modifying solution includes a 33wt% ethanol solution, coconut acid diethanolamide, and sodium lauryl sulfate in a mass ratio of 95:1.0:0.7.

### (3) Modifying β-cyclodextrin

34g of β-cyclodextrin is placed in 194g of anhydrous ethanol, and 1.6g of polyvinyl pyrrolidone and 1.8g of polyethylene glycol 200 are added for ball milling. The ball milling temperature is 53 °C, the ball milling time is 17 minutes, and the ball milling speed is 344 rpm. After ball milling, 2.5g of γ-aminopropylmethyldiethoxysilane is added, and ball milling continues for 27 minutes at a speed of 123 rpm. After ball milling, the temperature is raised to 64 °C, and the reaction is stirred for 2.8 hours. After stirring, the mixture is naturally cooled to room temperature, washed, and dried to obtain modified β-cyclodextrin.

### (4) Mixing

18g of the modified β-cyclodextrin is placed in 125g of dimethylformamide, then 3.6g of the second-time modified zeolite powder and 2.2g of sodium dodecylbenzene sulfonate are added. The temperature is raised to 85 °C for ultrasonic treatment. The ultrasonic time is 13 minutes, ultrasonic power is 44 W, and ultrasonic frequency is 33 kHz. After ultrasonic treatment, the mixture is stirred at a speed of 198 rpm for 2.6 hours. After stirring, the mixture is washed, dried, and primary molecular nest is obtained.

### (5) Cross-linking

13mL of acetic acid solution is added to 0.4g of chitosan, and after uniform stirring, 0.7g of the primary molecular nest is added. The mixture is stirred for 13 minutes and then heated to 66 °C. 3.2mL of glutaraldehyde solution is added for ultrasonic treatment. The ultrasonic time is 18 minutes, ultrasonic frequency is 35 kHz, and ultrasonic power is 45 W. After ultrasonic treatment, the mixture is stirred at 66 °C for 1.9 hours at a speed of 200 rpm. After stirring, the mixture is naturally cooled to room temperature, washed with acetone for 3 times, and vacuum freeze-dried at -47 °C for 18 hours under a vacuum degree of 30 Pa, resulting in the molecular nest carrier.

The chitosan has a deacetylation degree of 91.0%, and a molecular weight of 148,000.

The acetic acid solution has a mass concentration of 4.8%.

The glutaraldehyde solution has a mass concentration of 47%.

### 3. Loading

The molecular nest carrier is mixed with 7 times the volume of deionized water, and propylene glycol fatty acid ester is added. The temperature is raised to 45 °C and stirred for 23 minutes. Subsequently, a biologically active substance is added, and stirring is continued for 2.0 hours at a stirring speed of 172 rpm. After stirring, the mixture is allowed to stand for 6.3 hours. After standing, the mixture is filtered and dried to obtain a functional molecular nest. The deionized water, the propylene glycol fatty acid ester, and the biologically active substance are in a mass ratio of 94:1.1:8.6.

### 4. Preparing a functional impregnating agent

Liquid paraffin and carboxymethyl cellulose are added to deionized water and stirred uniformly. The temperature is then raised to 44°C, and the functional molecular nest and silica sol are added. Stirring is continued for 32 minutes at a stirring speed of 454 rpm. After stirring is completed, the functional impregnating agent is obtained. The deionized water, the liquid paraffin, the carboxymethyl cellulose, the functional molecular nest, and the silica sol are in a mass ratio of 107:2.4:8.1:10:8.7.

### 5. Impregnating

190g of a OSB is placed in a sealed container, and 6 times the volume of the functional impregnating agent and 8.2g of isooctyl alcohol polyoxyethylene ether are introduced. Nitrogen is introduced to raise the pressure to 0.7 MPa, the impregnating temperature is controlled at 53°C, and the impregnating time is 4.2 hours. After the impregnating is completed, the OSB is placed in a 28 °C environment for ventilation and drying for 11 hours to obtain an anti-mold, odor-removing OSB containing the biologically active substance.

### Embodiment 3

### 1. Preparing a biologically active substance

The plant is cleaned and dried to a moisture content of 1.7wt%. The dried plant is then placed in an airflow pulverizer for pulverization to obtain a powder, where the particle size is controlled at 220 nm. The powder is placed in 7 times the volume of an ethanol solution, where the stirring rate is controlled at 210 rpm. The temperature is raised at a rate of 4.1 °C/min to 60 °C, and stirring is continued for 2.6 hours. After stirring, microwave-ultrasonic extraction is carried out, where the microwave power is controlled at 485 W, microwave frequency at 2050 MHz, ultrasonic frequency at 34 kHz, ultrasonic power at 364 W, and the extraction time is 3.4 minutes. After microwave-ultrasonic extraction, the temperature is raised to 67 °C for 1.7 hours of heat preservation. After heat preservation, the extract is filtered and placed in a vacuum environment, where the vacuum degree is controlled at 0.05 MPa, and the extract is concentrated to 32% of its original volume at 76°C. Finally, the concentrate is spray-dried and pulverized to a particle size of 255 nm to obtain the biologically active substance. The plant used is camphorwood, and the ethanol solution has a volume concentration of 72%.

### 2. Preparing a molecular nest carrier

### (1) First-time modifying zeolite powder

The zeolite powder is soaked in 7 times the volume of sodium hydroxide solution, where the soaking temperature is 67°C, and the soaking time is 58 minutes. After soaking, the zeolite powder is filtered, washed, and dried to obtain soaked zeolite powder. The soaked zeolite powder is then placed in a calcination furnace for high-temperature treatment. The temperature is first raised at a rate of 2.8 °C/min to 185 °C and maintained for 42 minutes. Then, the temperature is further raised at a rate of 3.5 °C/min to 376 °C and maintained for 2.6 hours. After the heat preservation treatment, the powder is naturally cooled to room temperature to obtain first-time modified zeolite powder. The zeolite powder has a particle size of 420 nm, and the mass concentration of the sodium hydroxide solution is 32%.

### (2) Second-time modifying zeolite powder

18g of the first-time modified zeolite powder is mixed with 97g of modifying solution, the temperature is raised to 64°C, and stirring is continued for 37 minutes, where the stirring speed is controlled at 370 rpm. After uniform stirring, the temperature is lowered at a rate of 0.6°C/min to 48°C. Then, 1.4g of KH560 and 0.7g of hexadecyltrimethoxysilane are added, and stirring is continued for 2.6 hours at a stirring speed of 300 rpm. After stirring, the mixture is filtered, washed, and dried to obtain second-time modified zeolite powder. The modifying solution includes a 36wt% ethanol solution, coconut acid diethanolamide, and sodium lauryl sulfate, where the 36wt% ethanol solution, the coconut acid diethanolamide, and the sodium lauryl sulfate are in a mass ratio of 100:1.5:0.9.

### (3) Modifying β-cyclodextrin

36g of β-cyclodextrin is placed in 205g of anhydrous ethanol, and 1.8g of polyvinyl pyrrolidone and 2.2g of polyethylene glycol 200 are added for ball milling, where the ball milling temperature is 58°C, and the ball milling time is 22 minutes at a ball milling speed of 357 rpm. After ball milling, 2.7g of γ-aminopropyltriethoxysilane is added, and ball milling is continued for 32 minutes at a ball milling speed of 133 rpm. After ball milling, the temperature is raised to 68°C, and the reaction is stirred for 3.2 hours. After stirring, the mixture is naturally cooled to room temperature, washed, and dried to obtain modified β-cyclodextrin.

### (4) Mixing

22 g of the modified β-cyclodextrin is placed in 136 g of dimethylformamide, and then 3.8 g of the second-time modified zeolite powder and 2.5 g of sodium dodecylbenzene sulfonate are added. The temperature is raised to 88 °C, and ultrasonic treatment is carried out for 17 minutes at an ultrasonic power of 51 W and an ultrasonic frequency of 38 kHz. After ultrasonic treatment, stirring is performed at a stirring speed of 211 rpm for 2.8 hours. After stirring, the mixture is washed, dried, and a primary molecular nest is obtained.

### (5) Crosslinking

0.6g of chitosan is mixed with 17mL of acetic acid solution and stirred uniformly. Then, 0.9 g of the primary molecular nest is added and stirred for 17 minutes. The temperature is raised to 68 °C, and 3.6mL of glutaraldehyde solution is added for ultrasonic treatment, where the ultrasonic time is 22 minutes, the ultrasonic frequency is 37 kHz, and the ultrasonic power is 50 W. After ultrasonic treatment, stirring is performed at 68 °C for 2.2 hours at a stirring speed of 208 rpm. After stirring, the mixture is naturally cooled to room temperature, washed 3 times with acetone, and then vacuum freeze-dried at a freezing temperature of -42 °C for 23 hours, with a vacuum degree of 35 Pa, to obtain the molecular nest carrier. The degree of deacetylation of chitosan is 91.5%, and the molecular weight is 153,000. The mass concentration of the acetic acid solution is 5.1 %, and the mass concentration of the glutaraldehyde solution is 51%.

### 3. Loading

The molecular nest carrier is mixed with 9 times the volume of deionized water, and propylene glycol fatty acid ester is added. The temperature is raised to 50 °C and stirred for 29 minutes. Subsequently, the biologically active substance is added, and stirring is continued for 2.3 hours at a stirring speed of 180 rpm. After stirring is completed, the mixture is allowed to stand for 6.7 hours. After standing, the mixture is filtered and dried to obtain a functional molecular nest. The deionized water, the propylene glycol fatty acid ester, and the biologically active substance are in a mass ratio of 98:1.4:8.8.

### 4. Preparing functional impregnating agent

Liquid paraffin and carboxymethyl cellulose are added to deionized water and stirred uniformly. The temperature is then raised to 48°C, and the functional molecular nest and silica sol are added. Stirring is continued for 37 minutes at a stirring speed of 461 rpm. After stirring is completed, the functional impregnating agent is obtained. The deionized water, the liquid paraffin, the carboxymethyl cellulose, the functional molecular nest, and the silica sol are in a mass ratio of 114:2.6:8.5:13:9.2.

### 5. Impregnating

210g of a OSB is placed in a sealed container, and 8 times the volume of the functional impregnating agent and 8.5g of isooctyl alcohol polyoxyethylene ether are introduced. Nitrogen is introduced to raise the pressure to 0.9 MPa, the impregnating temperature is controlled at 57 °C, and the impregnating time is 4.6 hours. After the impregnating is completed, the OSB is placed in a 32 °C environment for ventilation and drying for 14 hours to obtain an anti-mold, odor-removing OSB containing the biologically active substance.

### Comparative Example 1

Based on Embodiment 1, the differences are as follows:
(1) The steps of first-time modifying zeolite powder and second-time modifying zeolite powder are omitted. In the mixing step, the second-time modified zeolite powder is replaced by an equivalent amount of untreated zeolite powder.
(2) In the step of modifying β-cyclodextrin, polyvinyl pyrrolidone and polyethylene glycol 200 are replaced by an equivalent amount of anhydrous ethanol.

All other operations remain the same.

### Comparative Example 2

Based on Embodiment 1, the differences are as follows:
(1) In the step of second-time modifying zeolite powder, coconut acid diethanolamide and sodium lauryl sulfate in the modifying solution are replaced by a 35wt% ethanol solution in an equivalent amount.
(2) The crosslinking step is omitted. In the loading step, the molecular nest carrier is replaced by an equivalent amount of the primary molecular nest.

All other operations remain the same.

### Performance testing

Performance testing is conducted on the anti-mold, odor-removing OSBs containing biologically active substances prepared in Embodiments 1-3 and Comparative Examples 1-3, as described below:
Antibacterial performance

| | Embodiment 1 | Embodiment 2 | Embodiment 3 | Comparative Example 1 | Comparative Example 2 |
|---|---|---|---|---|---|
| Inhibition rate against Candida albicans (%) | 92.6 | 91.8 | 92.1 | 83.2 | 87.8 |
| Inhibition rate against Staphylococcus aureus (%) | 95.2 | 93.0 | 94.5 | 85.4 | 89.6 |
| Inhibition rate against Escherichia coli (%) | 93.7 | 92.2 | 93.1 | 84.0 | 90.5 |

Anti-mold performance

| | Embodiment 1 | Embodiment 2 | Embodiment 3 | Comparative Example 1 | Comparative Example 2 |
|---|---|---|---|---|---|
| Anti-mold performance (grade) | 0 | 0 | 0 | 2 | 1 |

Odor-removing performance

| | Embodiment 1 | Embodiment 2 | Embodiment 3 | Comparative Example 1 | Comparative Example 2 |
|---|---|---|---|---|---|
| Odor-removing performance (grade) | Grade 1 | Grade 1 | Grade 1 | Grade 2 | Grade 2 |

Mechanical Performance

| | Embodiment 1 | Embodiment 2 | Embodiment 3 | Comparative Example 1 | Comparative Example 2 |
|---|---|---|---|---|---|
| Impact strength (kJ/m²) | 9.8 | 9.2 | 9.5 | 6.4 | 7.8 |
| Tensile strength (MPa) | 15.6 | 13.4 | 14.9 | 8.7 | 10.4 |
| Compressive strength (MPa) | 18.2 | 17.1 | 17.6 | 11.3 | 13.5 |

### (5) Aging resistance performance

The products prepared in Embodiments 1-3 and Comparative Examples 1-2 are placed in an environment with a temperature of 46 °C and a humidity of 70% for 7 days. After this period, they are placed in an environment with an ultraviolet intensity of 760 W/m² for 7 days. This cycle is repeated 10 times, and the performance of the products is tested again, as shown below:

| Performance | item | Embodiment 1 | Embodiment 2 | Embodiment 3 | Comparative Example 1 | Comparative Example 2 |
|---|---|---|---|---|---|---|
| Mechanical Performance | Impact strength (kJ/m²) | 9.4 | 8.7 | 9.0 | 5.4 | 6.8 |
| | Tensile strength (MPa) | 14.6 | 12.4 | 13.9 | 7.2 | 9.0 |
| | Compressive strength (MPa) | 17.1 | 15.9 | 16.4 | 9.4 | 11.8 |
| Antibacterial Performance | Inhibition rate against Candida albicans (%) | 87.5 | 86.4 | 87.1 | 74.2 | 76.3 |
| | Inhibition rate against Staphylococcus aureus (%) | 89.9 | 88.2 | 89.3 | 77.4 | 79.0 |
| | Inhibition rate against Escherichia coli (%) | 88.2 | 87.1 | 87.8 | 75.0 | 78.7 |

In this disclosure, the zeolite powder is modified, resulting in good dispersibility after treatment with the modifying solution. Subsequently, kH560 and 0.6 g of hexadecyltrimethoxysilane are used for treatment. The hexadecyltrimethoxysilane may improve the moisture resistance of the OSB, while kH560 introduces epoxy groups onto the surface of the zeolite powder. The β-cyclodextrin is then modified so that its surface is grafted with amino groups. Through the mixing step, zeolite powder with surface-modified β-cyclodextrin is prepared. Glutaraldehyde is used as a crosslinking agent to crosslink chitosan with the zeolite powder surface-modified with β-cyclodextrin. This results in a strong binding force and stable structure between the β-cyclodextrin, zeolite powder, and chitosan, leading to an effective loading of biologically active substances with good slow-release properties. The strong penetration and uniform impregnating of the OSB ensure that the components of the OSB are homogeneous and stable, providing lasting antibacterial, odor-removing, and anti-mold performance while enhancing the mechanical properties and improving the aging resistance of the OSB.

Unless otherwise specified, the ratios mentioned in this disclosure are mass ratios, and the percentages described are mass percentages.

## Claims

1. A method for preparing an anti-mold and odor-removing oriented strand board (OSB), wherein the anti-mold and odor-removing OSB comprises a biologically active substance, and the method comprises:
preparing the biologically active substance;
preparing a molecular nest carrier;
loading the molecular nest carrier with the biologically active substance;
preparing a functional impregnating agent; and
impregnating a OSB with the functional impregnating agent,
wherein preparing the molecular nest carrier comprises first-time modifying zeolite powder, second-time modifying zeolite powder, modifying β-cyclodextrin, mixing, and cross-linking,
wherein the first-time modifying zeolite powder comprises:
soaking zeolite powder in 5 times the volume of a sodium hydroxide solution at a temperature of 63-67 °C for 52-58 minutes;
filtering, washing, and drying to obtain soaked zeolite powder;
placing the soaked zeolite powder in a calcination furnace for high-temperature treatment, heating at a rate of 2.3-2.8 °C/min to 176-185 °C, maintaining at 176-185 °C for 37-42 minutes, then heating at a rate of 3.0-3.5 °C/min to 362-376 °C, maintaining at 362-376 °C for 2.4-2.6 hours; and
naturally cooling to room temperature to obtain first-time modified zeolite powder;
wherein the second-time modifying zeolite powder comprises:
mixing the first-time modified zeolite powder with a modifying solution, wherein the modifying solution comprises 33-36wt% ethanol solution, coconut acid diethanolamide, and sodium lauryl sulfate;
heating to 60-64 °C, stirring for 31-37 minutes at a stirring speed of 357-370 rpm;
cooling at a rate of 0.4-0.6 °C/min to 42-48 °C, adding kH560 and hexadecyltrimethoxysilane;
continuing to stir for 2.4-2.6 hours at a stirring speed of 278-300 rpm; and
filtering, washing, and drying to obtain second-time modified zeolite powder;
wherein the modifying β-cyclodextrin comprises:
placing β-cyclodextrin in anhydrous ethanol;
adding polyvinyl pyrrolidone and polyethylene glycol 200 for ball milling at a temperature of 53-58 °C for 17-22 minutes at a ball milling speed of 344-357 rpm;
adding γ-aminopropylmethyldiethoxysilane;
continuing ball milling for 27-32 minutes at a ball milling speed of 123-133 rpm;
heating to 64-68 °C, stirring for 2.8-3.2 hours; and
naturally cooling to room temperature, washing, and drying to obtain modified β-cyclodextrin;
wherein the mixing comprises:
placing the modified β-cyclodextrin in dimethylformamide;
adding the second-time modified zeolite powder and sodium dodecylbenzene sulfonate;
heating to 85-88 °C;
performing ultrasonic treatment for 13-17 minutes at an ultrasonic power of 44-51 W and a frequency of 33-38 kHz; and
stirring at a speed of 198-211 rpm for 2.6-2.8 hours, washing, and drying to obtain a primary molecular nest;
wherein the cross-linking comprises:
adding acetic acid solution to chitosan;
adding the primary molecular nest, stirring for 13-17 minutes;
heating to 66-68 °C;
adding glutaraldehyde solution;
performing ultrasonic treatment for 18-22 minutes at an ultrasonic frequency of 35-37 kHz and a power of 45-50 W;
stirring at 66-68 °C for 1.9-2.2 hours at a stirring speed of 200-208 rpm;
naturally cooling to room temperature;
washing with acetone for 3 times; and
vacuum freeze-drying at a freezing temperature of -47 °C to -42 °C and a vacuum degree of 30-35 Pa for 18-23 hours, to obtain the molecular nest carrier; wherein the preparing the biologically active substance comprises:
cleaning a plant;
drying the plant to a moisture content of 1.3-1.7wt%;
pulverizing the plant to obtain powder with a particle size of 180-220 nm;
placing the powder in 5-7 times the volume of an ethanol solution;
stirring for 2.4-2.6 hours at a speed of 190-210 rpm, while heating to 56-60 °C at a rate of 3.5-4.1 °C/min;
performing microwave-ultrasonic extraction for 3.0-3.4 minutes at a microwave power of 474-485 W, a microwave frequency of 1950-2050 MHz, an ultrasonic frequency of 30-34 kHz, an ultrasonic power of 354-364 W;
heating to 64-67 °C and maintaining for 1.3-1.7 hours;
filtering to obtain an extract;
vacuum concentrating the extract to 28-32% of its original volume at 72-76 °C while controlling a vacuum degree of 0.03-0.05 MPa; and
spray-drying the extract and pulverizing to obtain the biologically active substance with a particle size of 245-255 nm, wherein
the plant comprises Masson pine needles, camphorwood, or a mixture of Masson pine needles and camphorwood in a mass ratio of 1:1; and
the ethanol solution has a volume concentration of 68-72%;
wherein the preparing the functional impregnating agent comprises:
adding liquid paraffin and carboxymethyl cellulose to deionized water, stirring, and heating to 44-48 °C;
adding the functional molecular nest and silica sol; and
stirring for 32-37 minutes at a stirring speed of 454-461 rpm to obtain the functional impregnating agent, wherein
the deionized water, the liquid paraffin, the carboxymethyl cellulose, the functional molecular nest, and the silica sol are in a mass ratio of (107-114):(2.4-2.6):(8.1-8.5):(10-13):(8.7-9.2).

2. The method according to any of the previous claims, wherein
in the first-time modifying zeolite powder, the zeolite powder has a particle size of 380-420 nm, and the sodium hydroxide solution has a mass concentration of 28-32%; and
in the second-time modifying zeolite powder, the 33-36wt% ethanol solution, the coconut acid diethanolamide, and the sodium lauryl sulfate are in a mass ratio of (95-100):(1.0-1.5):(0.7-0.9), and the first-time modified zeolite powder, the modifying solution, the kH560, and the hexadecyltrimethoxysilane are in a mass ratio of (16-18):(90-97):(1.0-1.4):(0.5-0.7).

3. The method according to any of the previous claims, wherein
in the modifying β-cyclodextrin, the β-cyclodextrin, the anhydrous ethanol, the polyvinyl pyrrolidone, the polyethylene glycol 200, the γ-aminopropyltriethoxysilane are in a mass ratio of (34-36):(194-205):(1.6-1.8):(1.8-2.2):(2.5-2.7).

4. The method according to any of the previous claims, wherein
in the mixing, the modified β-cyclodextrin, dimethylformamide, the second-time modified zeolite powder, and the sodium dodecylbenzene sulfonate are in a mass ratio of (18-22):(125-136):(3.6-3.8):(2.2-2.5).

5. The method according to any of the previous claims, wherein in the cross-linking,
the chitosan has a deacetylation degree of 91.0%-91.5%, and the chitosan has a molecular weight of 148,000-153,000;
the acetic acid solution has a mass concentration of 4.8%-5.1%;
the chitosan and the acetic acid solution are in a mass volume ratio of (0.4-0.6)g:(13-17)mL;
the glutaraldehyde solution has a mass concentration of 47 %-51%;
the acetic acid solution and the glutaraldehyde solution are in a volume ratio of (13-17):(3.2-3.6); and
the chitosan and the primary molecular nest are in a mass ratio of (0.4-0.6):(0.7-0.9).

6. The method according to any of the previous claims, wherein the loading the molecular nest carrier with the biologically active substance comprises:
mixing the molecular nest carrier with 7-9 times the volume of deionized water;
adding propylene glycol fatty acid ester;
heating to 45-50 °C;
stirring for 23-29 minutes;
adding the biologically active substance;
stirring for 2.0-2.3 hours at a stirring speed of 172-180 rpm; and
allowing to stand for 6.3-6.7 hours, filtering, and drying to obtain the functional molecular nest, wherein
the deionized water, the propylene glycol fatty acid ester, and the biologically active substance are in a mass ratio of (94-98):(1.1-1.4):(8.6-8.8) .

7. The method according to any of the previous claims, wherein the impregnating comprises:
placing the OSB in a sealed container;
adding 6-8 times the volume of the functional impregnating agent and isooctyl alcohol polyoxyethylene ether;
introducing nitrogen to increase a pressure to 0.7-0.9 MPa;
maintaining an impregnating temperature at 53-57 °C for 4.2-4.6 hours; and
ventilating and drying at 28-32 °C for 11-14 hours to obtain the anti-mold and odor-removing OSB,
wherein the OSB and the isooctyl alcohol polyoxyethylene ether are in a mass ratio of (190-210):(8.2-8.5).

8. An anti-mold and odor-removing oriented strand board (OSB) prepared according to the method of any of the previous claims,
the anti-mold and odor-removing oriented strand board (OSB) comprising a biologically active substance, wherein the biologically active substance comprises Masson pine needles, camphorwood, or a mixture of Masson pine needles and camphorwood.

## Patentansprüche

1. Ein Verfahren zum Herstellen einer schimmelhemmenden und geruchsbeseitigenden Grobspanplatte (Oriented Strand Board, OSB), wobei die schimmelhemmende und geruchsbeseitigende OSB eine biologisch aktive Substanz aufweist, und das Verfahren aufweist:
- Herstellen der biologisch aktiven Substanz und
- Herstellen eines molekularen Nestträgers;
- Beladen des molekularen Nestträgers mit der biologisch aktiven Substanz;
- Herstellen eines funktionalen Imprägniermittels; und
- Imprägnieren einer OSB mit dem funktionalen Imprägniermittel,
wobei das Herstellen des molekularen Nestträgers ein erstmaliges Modifizieren von Zeolithpulver, ein zweitmaliges Modifizieren von Zeolithpulver, Modifizieren von β-Cyclodextrin, Mischen und Vernetzen aufweist,
wobei das erstmalige Modifizieren von Zeolithpulver Folgendes aufweist:
Tränken von Zeolithpulver im 5-fachen Volumen einer Natriumhydroxidlösung bei einer Temperatur von 63 - 67 °C für 52 - 58 Minuten;
Filtern, Waschen und Trocknen zur Gewinnung von getränktem Zeolithpulver;
Einbringen des getränkten Zeolithpulver in einen Kalzinierungsofen zur Hochtemperaturbehandlung, Erhitzen mit einer Rate von 2,3 - 2,8 °C/min auf 176 - 185 °C, Halten bei 176 - 185 °C für 37 - 42 Minuten, anschließend Erhitzen mit einer Rate von 3,0 - 3,5 °C/min auf 362 - 376 °C, Halten bei von 362 - 376 °C für 2,4 - 2,6 Stunden; und
natürliches Abkühlen auf Raumtemperatur, um ein erstmalig modifiziertes Zeolithpulver zu erhalten;
wobei das zweitmalige Modifizieren von Zeolithpulver Folgendes aufweist
Mischen des erstmalig modifizierten Zeolithpulvers mit einer Modifizierungslösung, wobei die Modifizierungslösung eine 33 - 36 Gew.-%ige Ethanollösung, Kokosnusssäurediethanolamid und Natriumlaurylsulfat aufweist;
Erhitzen auf 60 - 64 °C, Rühren für 31- 37 Minuten bei einer Rührgeschwindigkeit von 357 - 370 U/min;
Abkühlen mit einer Rate von 0,4 - 0,6 °C/min auf 42 - 48 °C unter Zugabe von kH560 und Hexadecyltrimethoxysilan;
Fortgesetztes Rühren für 2,4 - 2,6 Stunden bei einer Rührgeschwindigkeit von 278 - 300 U/min; und
Filtern, Waschen und Trocknen zur Gewinnung von zweitmalig modifiziertem Zeolithpulver;
wobei das Modifizieren von β-Cyclodextrin Folgendes aufweist:
Einbringen von β-Cyclodextrin in wasserfreies Ethanol;
Hinzufügen von Polyvinylpyrrolidon und Polyethylenglykol 200 für Kugelmahlen bei einer Temperatur von 53 - 58 °C für 17 - 22 Minuten bei einer Kugelmahlgeschwindigkeit von 344 - 357 U/min;
Hinzufügen von γ-Aminopropylmethyldiethoxysilan;
Fortgesetztes Kugelmahlen für 27 - 32 Minuten bei einer Kugelmahlgeschwindigkeit von 123 - 133 U/min;
Erhitzen auf 64 - 68 °C, Rühren für 2,8 - 3,2 Stunden; und natürliches Abkühlen auf Raumtemperatur, Waschen und Trocknen, um modifiziertes β-Cyclodextrin zu erhalten;
wobei das Mischen Folgendes aufweist:
Einbringen des modifizierten β-Cyclodextrins in Dimethylformamid;
Hinzufügen des zweitmalig modifizierten Zeolithpulvers und Natriumdodecylbenzolsulfonat;
Erhitzen auf 85 - 88 °C;
Durchführen einer Ultraschallbehandlung für 13 - 17 Minuten bei einer Ultraschallleistung von 44 - 51 W und einer Frequenz von 33 - 38 kHz; und
Rühren bei einer Geschwindigkeit von 198 - 211 U/min für 2,6 - 2,8 Stunden, Waschen und Trocknen, um ein primäres Molekülnest zu erhalten;
wobei das Vernetzen Folgendes aufweist:
Hinzufügen von Essigsäurelösung zu Chitosan;
Hinzufügen des primären Molekülnestes, Rühren für 13 - 17 Minuten;
Erhitzen auf 66 - 68 °C;
Hinzufügen von Glutaraldehydlösung;
Durchführen einer Ultraschallbehandlung für 18 - 22 Minuten bei einer Ultraschallfrequenz von 35 - 37 kHz und einer Leistung von 45 - 50 W;
Rühren bei 66 - 68 °C für 1,9 - 2,2 Stunden bei einer Rührgeschwindigkeit von 200 - 208 U/min;
natürliches Abkühlen auf Raumtemperatur;
3-mal mit Aceton waschen; und
Vakuumgefriertrocknen bei einer Gefriertemperatur von -47 °C bis -42 °C und einem Vakuumgrad von 30 - 35 Pa für 18 - 23 Stunden, um den Molekülnestträger zu erhalten;
wobei das Herstellen der biologisch aktiven Substanz Folgendes aufweist:
Reinigen einer Pflanze;
Trocknen der Pflanze auf einen Feuchtigkeitsgehalt von 1,3 - 1,7 Gew.-%;
Pulverisieren der Pflanze, um ein Pulver mit einer Partikelgröße von 180 - 220 nm zu erhalten;
Einbringen des Pulvers in das 5- bis 7-fache Volumen einer Ethanol-Lösung;
Rühren für 2,4 - 2,6 Stunden bei einer Geschwindigkeit von 190 - 210 U/min, währenddessen Erhitzen auf 56 - 60 °C mit einer Rate von 3,5 - 4,1 °C/min;
Durchführen einer Mikrowellen-Ultraschallextraktion für 3,0 - 3,4 Minuten bei einer Mikrowellenleistung von 474 - 485 W, einer Mikrowellenfrequenz von 1950 - 2050 MHz, einer Ultraschallfrequenz von 30 - 34 kHz, einer Ultraschallleistung von 354 - 364 W;
Erhitzen auf 64 - 67 °C und Halten für 1,3 - 1,7 Stunden;
Filtern zur Gewinnung eines Extrakts;
Vakuumkonzentrieren des Extrakts auf 28 - 32 % seines ursprünglichen Volumens bei 72 - 76 °C unter Kontrolle eines Vakuumgrades von 0,03 - 0,05 MPa; und
Sprühtrocknen des Extrakts und Pulverisieren, um die biologisch aktive Substanz mit einer Partikelgröße von 245 - 255 nm zu erhalten, wobei
die Pflanze Masson-Kiefernnadeln, Kampferholz oder einem Gemisch aus Masson-Kiefernnadeln und Kampferholz im Masseverhältnis 1:1 aufweist; und
die Ethanollösung eine Volumenkonzentration von 68 - 72% hat;
wobei das Herstellen des funktionalen Imprägniermittels Folgendes aufweist:
Hinzufügen von flüssigem Paraffin und Carboxymethylcellulose zu deionisiertem Wasser, Rühren, und Erhitzen auf 44 - 48 °C;
Hinzufügen des funktionalen Molekülnestes und Kieselsol; und
Rühren für 32 - 37 Minuten bei einer Rührgeschwindigkeit von 454 - 461 U/min, um das funktionale Imprägniermittel zu erhalten, wobei
das deionisierte Wasser, das flüssige Paraffin, die Carboxymethylcellulose, das funktionale Molekülnest und das Kieselsol in einem Masseverhältnis von (107-114):(2,4-2,6):(8,1-8,5):(10-13):(8,7-9,2) vorliegen.

2. Das Verfahren nach einem der vorhergehenden Ansprüche, wobei
beim erstmaligen Modifizieren von Zeolithpulver, das Zeolithpulver eine Partikelgröße von 380 - 420 nm aufweist, und die Natriumhydroxidlösung eine Massenkonzentration von 28 - 32 % hat; und
beim zweitmaligen Modifizieren des Zeolithpulvers die 33 - 36 Gew.-%ige Ethanollösung, das Kokosnusssäurediethanolamid und das Natriumlaurylsulfat in einem Masseverhältnis (95-100):(1,0-1,5):(0,7-0,9) vorliegen, und beim erstmaligen Modifizieren des Zeolithpulvers die Modifizierungslösung, das kH560 und das Hexadecyltrimethoxysilan in einem Masseverhältnis von (16-18):(90-97):(1,0-1,4):(0,5-0,7) vorliegen.

3. Das Verfahren nach einem der vorhergehenden Ansprüche, wobei
beim Modifizieren von β-Cyclodextrin das β-Cyclodextrin, das wasserfreie Ethanol, das Polyvinylpyrrolidon, das Polyethylenglykol 200, das γ-Aminopropyltriethoxysilan in einem Masseverhältnis von (34-36):(194-205):(1,6-1,8):(1,8-2,2):(2,5-2,7) vorliegen.

4. Das Verfahren nach einem der vorhergehenden Ansprüche, wobei
beim Mischen das modifizierte β-Cyclodextrin, Dimethylformamid, das zweitmalig modifizierte Zeolithpulver und das Natriumdodecylbenzolsulfonat in einem Masseverhältnis von (18-22):(125-136):(3,6-3,8):(2,2-2,5) vorliegen.

5. Das Verfahren nach einem der vorhergehenden Ansprüche, wobei beim Vernetzen
das Chitosan einen Deacetylierungsgrad von 91,0 % - 91,5 % und ein Molekulargewicht von 148.000-153.000 hat;
die Essigsäurelösung eine Massekonzentration von 4,8 % - 5,1 % hat;
das Chitosan und die Essigsäurelösung in einem Massevolumenverhältnis von (0,4-0,6) g:(13-17) ml vorliegen;
die Glutaraldehydlösung eine Massekonzentration von 47 % - 51 % hat;
die Essigsäurelösung und die Glutaraldehydlösung in einem Volumenverhältnis von (13-17):(3,2-3,6) vorliegen; und
das Chitosan und das primäre Molekülnest in einem Masseverhältnis von (0,4-0,6):(0,7-0,9) vorliegen.

6. Das Verfahren nach einem der vorhergehenden Ansprüche, wobei das Aufladen des molekularen Nestträgers mit der biologisch aktiven Substanz Folgendes aufweist:
Mischen des molekularen Nestträgers mit dem 7- bis 9-fachen Volumen an deionisiertem Wasser;
Hinzufügen von Propylenglykolfettsäureester;
Erhitzen auf 45 - 50 °C;
Rühren für 23 - 29 Minuten;
Hinzufügen der biologisch aktiven Substanz;
Rühren für 2,0 - 2,3 Stunden bei einer Rührgeschwindigkeit von 172 - 180 U/min; und
Stehenlassen für 6,3 - 6,7 Stunden, Filtern und Trocknen, um das funktionale Molekülnest zu erhalten, wobei
das deionisierte Wasser, der Propylenglykolfettsäureester und die biologisch aktive Substanz in einem Masseverhältnis von (94-98):(1,1-1,4):(8,6-8,8) vorliegen.

7. Das Verfahren nach einem der vorhergehenden Ansprüche, wobei das Imprägnieren Folgendes aufweist:
die OSB-Platte in einen versiegelten Behälter platzieren;
Hinzufügen des 6- bis 8-fachen Volumens des funktionalen Imprägniermittels und Isooctylalkohol-Polyoxyethylenether;
Einleiten von Stickstoff um einen Druck auf 0,7 - 0,9 MPa zu erhöhen;
Aufrechterhalten einer Imprägniertemperatur von 53 - 57 °C für 4,2 - 4,6 Stunden; und
Lüften und Trocknen bei 28 - 32 °C für 11 - 14 Stunden, um das schimmel- und geruchsbeseitigende OSB zu erhalten,
wobei das OSB und der Isooctylalkohol-Polyoxyethylenether in einem Masseverhältnis von (190-210):(8,2-8,5) vorliegen.

8. Eine nach dem Verfahren nach einem der vorhergehenden Ansprüche hergestellte, schimmelhemmenden und geruchsbeseitigenden OSB-Platte (oriented strand board), wobei die schimmelhemmende und geruchsbeseitigende OSB-Platte eine biologisch aktive Substanz aufweist, wobei die biologisch aktive Substanz Masson-Kiefernnadeln, Kampferholz oder einer Mischung aus Masson-Kiefernnadeln und Kampferholz aufweist.

## Revendications

1. Procédé de préparation d'un panneau à copeaux orientés (OSB) anti-moisissure et anti-odeurs, dans lequel l'OSB anti-moisissure et anti-odeurs comprend une substance biologiquement active, et le procédé comprend :
la préparation de la substance biologiquement active ;
la préparation d'un vecteur de nid moléculaire ;
le chargement du vecteur de nid moléculaire avec la substance biologiquement active ;
la préparation d'un agent d'imprégnation fonctionnel ; et
l'imprégnation d'un OSB avec l'agent d'imprégnation fonctionnel,
dans lequel la préparation du vecteur de nid moléculaire comprend : la modification une première fois d'une poudre de zéolite, la modification une deuxième fois de la poudre de zéolite, la modification de β-cyclodextrine, le mélange et la réticulation,
dans lequel la modification une première fois d'une poudre de zéolite comprend les actions suivantes :
tremper de la poudre de zéolite dans 5 fois le volume d'une solution d'hydroxyde de sodium à une température de 63 à 67 °C pendant 52 à 58 minutes ;
filtrer, laver et sécher pour obtenir de la poudre de zéolite trempée ;
placer la poudre de zéolite trempée dans un four de calcination pour un traitement à haute température, chauffer à une vitesse de 2,3 à 2,8 °C/min jusqu'à 176 à 185 °C, maintenir à 176 à 185 °C pendant 37 à 42 minutes, puis chauffer à une vitesse de 3,0 à 3,5 °C/min jusqu'à 362 à 376 °C, maintenir à 362 à 376 °C pendant 2,4 à 2,6 heures ; et
refroidir naturellement à température ambiante pour obtenir une poudre de zéolite modifiée une première fois ;
dans lequel la modification une deuxième fois de la poudre de zéolite comprend les actions suivantes :
mélanger la poudre de zéolite modifiée une première fois avec une solution de modification, dans lequel la solution de modification comprend une solution d'éthanol à 33 à 36 % en poids, du diéthanolamide d'acide de coco et du lauryl sulfate de sodium ;
chauffer à 60 à 64 °C, agiter pendant 31 à 37 minutes à une vitesse d'agitation de 357 à 370 tr/min ;
refroidir à une vitesse de 0,4 à 0,6 °C/min jusqu'à 42 à 48 °C, ajouter du kH560 et de l'hexadécyltriméthoxysilane ;
continuer à agiter pendant 2,4 à 2,6 heures à une vitesse d'agitation de 278 à 300 tr/min ; et
filtrer, laver et sécher pour obtenir une poudre de zéolite modifiée une deuxième fois ;
dans lequel la modification de β-cyclodextrine comprend les actions suivantes :
placer de la β-cyclodextrine dans de l'éthanol anhydre ;
ajouter de la polyvinyl pyrrolidone et du polyéthylène glycol 200 pour un broyage à billes à une température de 53 à 58 °C pendant 17 à 22 minutes à une vitesse de broyage à billes de 344 à 357 tr/min ;
ajouter du γ-aminopropylméthyldiéthoxysilane ;
poursuivre le broyage à billes pendant 27 à 32 minutes à une vitesse de broyage à billes de 123 à 133 tr/min ;
chauffer à 64 à 68 °C, agiter pendant 2,8 à 3,2 heures ; et
refroidir naturellement à température ambiante, laver et sécher pour obtenir de la β-cyclodextrine modifiée ;
dans lequel le mélange comprend les actions suivantes :
placer la β-cyclodextrine modifiée dans du diméthylformamide ;
ajouter la poudre de zéolite modifiée une deuxième fois et du dodécylbenzènesulfonate de sodium ;
chauffer à 85 à 88 °C ;
réaliser un traitement par ultrasons pendant 13 à 17 minutes à une puissance ultrasonique de 44 à 51 W et à une fréquence de 33 à 38 kHz ; et
agiter à une vitesse de 198 à 211 tr/min pendant 2,6 à 2,8 heures, laver et sécher pour obtenir un nid moléculaire primaire ;
dans lequel la réticulation comprend les actions suivantes :
ajouter une solution d'acide acétique à du chitosane ;
ajouter le nid moléculaire primaire, agiter pendant 13 à 17 minutes ;
chauffer à 66 à 68 °C ;
ajouter une solution de glutaraldéhyde ;
réaliser un traitement par ultrasons pendant 18 à 22 minutes à une fréquence ultrasonique de 35 à 37 kHz et une puissance de 45 à 50 W ;
agiter à 66 à 68 °C pendant 1,9 à 2,2 heures à une vitesse d'agitation de 200 à 208 tr/min ;
refroidir naturellement jusqu'à température ambiante ;
laver trois fois à l'acétone ; et
lyophiliser sous vide à une température de congélation de -47 °C à -42 °C et à un degré de vide de 30 à 35 Pa pendant 18 à 23 heures, pour obtenir le vecteur de nid moléculaire ;
dans lequel la préparation de la substance biologiquement active comprend les actions suivantes :
nettoyer une plante ;
sécher la plante jusqu'à une teneur en humidité de 1,3 à 1,7 % en poids ;
pulvériser la plante pour obtenir une poudre avec une taille de particule de 180 à 220 nm ;
placer la poudre dans 5 à 7 fois le volume d'une solution d'éthanol ;
agiter pendant 2,4 à 2,6 heures à une vitesse de 190 à 210 tr/min, tout en chauffant à 56 à 60 °C à une vitesse de 3,5 à 4,1 °C/min ;
réaliser une extraction par micro-ondes et ultrasons pendant 3,0 à 3,4 minutes à une puissance de micro-ondes de 474 à 485 W, une fréquence de micro-ondes de 1 950 à 2 050 MHz, une fréquence ultrasonique de 30 à 34 kHz et une puissance ultrasonique de 354 à 364 W ;
chauffer à 64 à 67 °C et maintenir pendant 1,3 à 1,7 heure ;
filtrer pour obtenir un extrait ;
concentrer sous vide l'extrait jusqu'à 28 à 32 % de son volume initial à 72 à 76 °C, tout en contrôlant le degré de vide entre 0,03 et 0,05 MPa ; et
sécher par atomisation l'extrait et pulvériser pour obtenir la substance biologiquement active avec une taille de particule de 245 à 255 nm, dans lequel
la plante comprend des aiguilles de pin de Masson, du bois de camphrier, ou un mélange d'aiguilles de pin de Masson et de bois de camphrier dans un rapport massique de 1:1 ; et
la solution d'éthanol a une concentration volumique de 68 à 72 % ;
dans lequel la préparation de l'agent d'imprégnation fonctionnel comprend les actions suivantes :
ajouter de la paraffine liquide et de la carboxyméthylcellulose à de l'eau désionisée, agiter, et chauffer à 44 à 48 °C ;
ajouter le nid moléculaire fonctionnel et du sol de silice ; et
agiter pendant 32 à 37 minutes à une vitesse d'agitation de 454 à 461 tr/min pour obtenir l'agent d'imprégnation fonctionnel, dans lequel
l'eau désionisée, la paraffine liquide, la carboxyméthylcellulose, le nid moléculaire fonctionnel et le sol de silice sont dans un rapport massique de (107 à 114): (2,4 à 2,6):(8,1 à 8,5):(10 à 13):(8,7 à 9,2).

2. Procédé selon l'une quelconque des revendications précédentes, dans lequel
lors de la modification une première fois de la poudre de zéolite, la poudre de zéolite a une taille de particule de 380 à 420 nm, et la solution d'hydroxyde de sodium a une concentration massique de 28 à 32 % ; et
lors de la modification une deuxième fois de la poudre de zéolite, la solution d'éthanol à 33 à 36 % en poids, le diéthanolamide d'acide de coco et le lauryl sulfate de sodium sont dans un rapport massique de (95 à 100):(1,0 à 1,5):(0,7 à 0,9), et la poudre de zéolite modifiée une première fois, la solution de modification, le kH560 et l'hexadécyltriméthoxysilane sont dans un rapport massique de (16 à 18):(90 à 97):(1,0 à 1,4):(0,5 à 0,7).

3. Procédé selon l'une quelconque des revendications précédentes, dans lequel
lors de la modification de β-cyclodextrine, la β-cyclodextrine, l'éthanol anhydre, la polyvinyl pyrrolidone, le polyéthylène glycol 200 et le γ-aminopropyltriéthoxysilane sont dans un rapport massique de (34 à 36) : (194 à 205) : (1, 6 à 1,8) : (1, 8 à 2,2):(2,5 à 2,7).

4. Procédé selon l'une quelconque des revendications précédentes, dans lequel
lors du mélange, la β-cyclodextrine modifiée, le diméthylformamide, la poudre de zéolite modifiée une deuxième fois et le dodécylbenzène sulfonate de sodium sont dans un rapport massique de (18 à 22) : (125 à 136) : (3,6 à 3,8):(2,2 à 2,5).

5. Procédé selon l'une quelconque des revendications précédentes, dans lequel, lors de la réticulation,
le chitosane a un degré de désacétylation de 91,0 % à 91,5 % et un poids moléculaire de 148 000 à 153 000 ;
la solution d'acide acétique a une concentration massique de 4,8 % à 5,1 % ;
le chitosane et la solution d'acide acétique sont dans un rapport massique de (0,4 à 0,6) g: (13 à 17) mL ;
la solution de glutaraldéhyde a une concentration massique de 47 % à 51 % ;
la solution d'acide acétique et la solution de glutaraldéhyde sont dans un rapport volumique de (13 à 17) : (3,2 à 3, 6) ; et
le chitosane et le nid moléculaire primaire sont dans un rapport massique de (0,4 à 0,6): (0,7 à 0,9).

6. Procédé selon l'une quelconque des revendications précédentes, dans lequel la charge du vecteur de nid moléculaire avec la substance biologiquement active comprend les actions suivantes :
mélanger le vecteur de nid moléculaire avec 7 à 9 fois le volume d'eau désionisée ;
ajouter de l'ester d'acide gras de propylène glycol ;
chauffer à 45 à 50 °C ;
agiter pendant 23 à 29 minutes ;
ajouter la substance biologiquement active ;
agiter pendant 2,0 à 2,3 heures à une vitesse d'agitation de 172 à 180 tr/min ; et
laisser reposer pendant 6,3 à 6,7 heures, filtrer, et sécher pour obtenir le nid moléculaire fonctionnel, dans lequel
l'eau désionisée, l'ester d'acide gras de propylène glycol et la substance biologiquement active sont dans un rapport massique de (94 à 98):(1,1 à 1,4):(8,6 à 8,8)

7. Procédé selon l'une quelconque des revendications précédentes, dans lequel l'imprégnation comprend les actions suivantes :
placer l'OSB dans un récipient hermétique ;
ajouter 6 à 8 fois le volume de l'agent d'imprégnation fonctionnel et du polyoxyéthylène éther d'alcool isooctylique ;
introduire de l'azote pour augmenter une pression à 0,7 à 0,9 MPa ;
maintenir une température d'imprégnation à 53 à 57 °C pendant 4,2 à 4,6 heures ; et
ventiler et sécher à 28 à 32 °C pendant 11 à 14 heures pour obtenir l'OSB anti-moisissure et anti-odeurs,
dans lequel l'OSB et le polyoxyéthylène éther d'alcool isooctylique sont dans un rapport massique de (190 à 210): (8,2 à 8,5).

8. Panneau à copeaux orientés (OSB) anti-moisissure et anti-odeurs préparé selon le procédé de l'une quelconque des revendications précédentes,
le panneau à copeaux orientés (OSB) anti-moisissure et anti-odeurs comprenant une substance biologiquement active, dans lequel la substance biologiquement active comprend des aiguilles de pin de Masson, du bois de camphrier, ou un mélange d'aiguilles de pin de Masson et de bois de camphrier.
